# EUROPÄISCHE PATENTSCHRIFT

(11) **EP 2 130 728 B1**
(45) Veröffentlichungstag und Bekanntmachung des Hinweises auf die Patenterteilung: **13.07.2016**
(21) Anmeldenummer: 09100300.4
(22) Anmeldetag: 28.05.2009
(51) Int. Cl.: B60S 1/34

(54) **Wischerwellenanordnung sowie Scheibenwischanlage**
Wiper shaft assembly and window wiper assembly
Agencement d'arbre d'essuie-glace et installation d'essuie-glace

(30) Priorität: 02.06.2008 DE 102008002150
(43) Veröffentlichungstag der Anmeldung: 09.12.2009
(73) Patentinhaber: ROBERT BOSCH GMBH, 70442 Stuttgart (DE)
(72) Erfinder: Huber, Martin, 77855, Achern (DE)

(56) Entgegenhaltungen:
- WO-A1-2010/028855
- DE-A1- 19 804 135
- DE-A1- 19 851 881
- FR-A1- 2 716 656
- FR-A1- 2 863 990
- FR-A1- 2 863 991

## Beschreibung

### Stand der Technik

Die Erfindung betrifft eine Wischerwellenanordnung für eine Scheibenwischanlage gemäß dem Oberbegriff des Anspruchs 1 sowie eine Scheibenwischanlage gemäß Anspruch 5.

Bekannte Scheibenwischanlagen weisen mindestens eine Wischerwellenanordnung mit einer Wischerwelle auf, wobei die Wischerwelle zum pendelnden Antreiben eines, vorzugsweise lösbar an der Wischerwelle festlegbaren, Wischerarms ausgebildet und angeordnet ist. Um die Wischerwelle gegen ein unbeabsichtigtes axiales Verstellen relativ zu einem Wischerwellenlager zu verhindern, ist es bekannt, ein als Federscheibe (Speednut) ausgebildetes Funktionsbauteil vorzusehen, das in eine Umfangsnut in der Wischerwelle formschlüssig eingreift und das sich weiterhin mit einer Flachseite an einer von der Wischerwelle durchsetzten Anlaufscheibe der Wischerwellenanordnung in axialer Richtung abstützt. Ein weiterer Nachteil derartiger bekannter Axiälsicherungen besteht darin, dass die zum Einsatz kommenden Federscheiben bei der Montage häufig zu Bauteilbeschädigungen führen, die Korrosionserscheinungen zur Folge haben. Darüber hinaus kann es bei einigen Materialpaarungen auch zu Kontaktkorrosionserscheinungen kommen.

Ferner ist es bekannt, bei Wischerwellenanordnungen zusätzlich zu dem axialen Sicherungselement Kunststoffkappen oder Dichtungsringe einzusetzen, die als Wasserschutz dienen und ein Eindringen von Wasser in das Wischerwellenlager verhindern sollen.

Ferner ist es bekannt, die Wischerwellenanordnungen durch das Vorsehen von Sollbruchstellen an Formrohren, Platinen öder Trägerteilen mit einer Fußgängeraufprallschutzfunktion auszustatten, wobei die Wischerwellenanordnung bei einer durch einen Aufprall verursachten Axialkraftbeaufschlagung definiert an den Sollbruchstellen bricht.

Nachteilig bei den bekannten Wischerwellenanordnungen ist, dass zur Realisierung der unterschiedlichen Funktionen Axialsicherung, Wasserschutz und Fußgängeraufprallschutz eine Vielzahl von Bauteilen benötigt werden, was zu einer aufwändigen Montage und zu hohen Materialkosten führt.

Die Offenlegungsschrift FR 7 716 656 A1 zeigt eine Wischeranordnung umfassend eine Wischerwelle, auf der eine Schutzmuffe aufgesteckt ist.

Die Offenlegungsschrift FR 2 863 990 A1 zeigt eine Wischeranordnung.

Die Offenlegungsschrift DE 198 04 135 A1 zeigt ein Wischerlager mit einem Lagergehäuse, in dem eine Antriebswelle mit einem radialen Lager gelagert ist.

### Offenbarung der Erfindung

### Technische Aufgabe

Der Erfindung liegt die Aufgabe zugrunde, eine Wischerwellenanordnung mit einer minimierten Bauteilanzahl vorzuschlagen. Ferner besteht die Aufgabe darin, eine entsprechend optimierte Scheibenwischanlage mit mindestens einer Wischerwellenanordnung vorzuschlagen.

### Technische Lösung

Diese Aufgabe wird hinsichtlich der Wischerwellenanordnung mit den Merkmalen des Anspruchs 1 und hinsichtlich der Scheibenwischanlage mit den Merkmalen des Anspruchs 5 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Merkmalen der Figuren offenbarten Merkmalen.

Der Erfindung liegt der Gedanke zugrunde, eine Axialsicherungsfunktion zur Sicherung der Wischerwelle gegen ein unbeabsichtigtes Axialverstellen sowie eine Wasserschutzfunktion in ein gemeinsames Funktionsbauteil zu integrieren. Hierzu ist bei einer nach dem Konzept der Erfindung ausgebildeten Wischerwellenanordnung an dem Funktionsbauteil ein Wasserschutzabschnitt vorgesehen, der derart ausgebildet und angeordnet ist, dass er die Abstützfläche, mit der sich das Funktionsbauteil in axialer Richtung an einem Bauelement der Wischerwellenanordnung abstützt in axialer Richtung überragt, derart, dass ein Eindringen von Wasser in den zwischen der Abstützfläche und dem Bauelement ausgebildeten minimalen Spalt verhindert wird. Dies wiederum verhindert in der Folge ein Eindringen von Wasser in ein dem Bauelement nachgeordnetes Wischerwellenlager. Bevorzugt ist die Axialerstreckung des Wasserschutzabschnittes derart ausgebildet, dass dieser das axial unmittelbar benachbarte Bauelement in axialer Richtung vollständig, zumindest jedoch abschnittsweise überragt. Ein optimaler Wasserschutz wird erhalten, wenn die Axialerstreckung des Funktionsbauteils derart gewährleistet ist, dass es nicht nur das unmittelbar benachbarte Bauelement, sondern zumindest auch abschnittsweise, ein in axialer Richtung zu dem Bauelement benachbartes weiteres Bauelement der Wischerwellenanordnung axial überragt und somit auch ein Eindringen von Wasser in einen, insbesondere minimalen, zwischen diesen Bauelementen ausgebildeten, insbesondere radialen, Spalt verhindert. Von besonderem Vorteil ist es, wenn sich der Wasserschutzabschnitt in axialer Richtung über eine obere Stirnseite eines Formrohrs einer Wischerwellenlagereinheit hinaus erstreckt, also mit einem unteren Randabschnitt radial benachbart zur Mantelfläche des Formrohres angeordnet ist. Durch die Integration der Wasserschutzfunktion und der Axialsicherungsfunktion in ein gemeinsames Funktionsbauteil kann auf separate Kunststoffkappen und/oder Ringdichtungen, die ein Eindringen von Wasser in das Wischerwellenlager verhindern sollen, mit Vorteil verzichtet werden.

Um die Wasserschutzfunktion des Funktionsbauteils zu optimieren, ist es bevorzugt, wenn das Funktionsbauteil mit Hilfe eines Presssitzes an der Wischerwelle festgelegt ist, derart, dass ein Wassereintritt in axialer Richtung durch einen Bereich zwischen dem Funktionsbauteil und der Wischerwelle hindurch sicher verhindert wird. Um die Montage der Wischerwellenanordnung zu erleichtern und das Gesamtgewicht der Wischerwellenanordnung bei gleichzeitiger Minimierung der Beschädigungsgefahr für Bauteile der Wischerwellenanordnung zu minimieren, ist in Weiterbildung der Erfindung mit Vorteil vorgesehen, das Funktionsbauteil aus Kunststoff auszubilden. Besonders bevorzugt handelt es sich bei dem Funktionsbauteil um ein Kunststoff-Spritzgussteil. Durch die Ausbildung des Funktionsbauteils aus Kunststoff wird neben den vorgenannten Vorteilen auch ein Schutz vor Kontaktkorrosion erzielt.

Zum Herstellen einer formschlüssigen, vorzugsweise zumindest spritzwasserdichten, Verbindung zwischen dem Funktionsbauteil und der Wischerwelle ist eine Ausführungsform besonders geeignet, bei der das Funktionsbauteil in radialer Richtung in eine Umfangsnut der Wischerwelle eingreift. Dabei ist es, wie eingangs erwähnt, besonders bevorzugt, wenn das Funktionsbauteil mittels eines Presssitzes in der Umfangsnut festgelegt ist, um zum einen eine drehfeste Verbindung zwischen dem Funktionsbauteil und der Wischerwelle und zum anderen eine zumindest weitgehend wasserdichte Verbindung zwischen dem Funktionsbauteil und der Wischerwelle zu realisieren.

Besonders bevorzugt ist eine Ausführungsform der Wischerwellenanordnung, bei der der Wasserschutzabschnitt, der sich in axialer Richtung von einem freien Ende der Wischerwelle weg erstreckt, rockförmig ausgeformt ist. Besonders bevorzugt weist der Wasserschutzabschnitt zumindest näherungsweise die Form einer Wanne auf, die eine umlaufende Umfangswand aufweist, welche vorzugsweise im Bereich ihres oberen Endes in einen Grundplattenabschnitt übergeht, und, vorzugsweise zentrisch, von der Wischerwelle in axialer Richtung durchsetzt ist. Bevorzugt ist die Umfangswand des Wasserschutzabschnitts in Umfangsrichtung geschlossen ausgebildet, um einen Wassereintritt in Richtung des Wischerlagers sicher verhindern zu können. Um in axialer Richtung auf den Wasserschutzauftrieb auftreffendes Wasser in radialer Richtung abzulenken, ist eine schräge, vorzugsweise zumindest näherungsweise konische, Formgebung des Wasserschutzabschnittes bevorzugt, wobei im einfachsten Fall auch beispielsweise eine kreiszylindrische Form realisierbar ist.

Erfindungsgemäß ist vorgesehen, dass die formschlüssige Verbindung zwischen dem Funktionsbauteil und der Wischerwelle eine Fußgängeraufprallschutzfunktion aufweist. Dies wird dadurch erreicht, dass der in die Umfangsnut der Wischerwelle eingreifende, insbesondere ringförmige, Eingreifabschnitt des Funktionsbauteils derart ausgebildet und/oder angeordnet ist, dass dieser bei Überschreiten einer definierten Axialkraftbeaufschlagung abschert, also dass das Funktionsbauteil ab einer gewissen Axialkraftbelastung seine Axialsicherungsfunktion verliert und die Wischerwelle in axialer Richtung relativ zu dem Funktionsbauteil verstellt werden kann, d. h. in axialer Richtung abtauchen kann, wodurch die Verletzungsgefahr insbesondere für Fußgänger bei einem Unfall erheblich reduziert wird. Anders ausgedrückt ist der Eingreifabschnitt definiert geschwächt ausgebildet und/oder angeordnet.

Erfindungsgemäß ist der Eingreifabschnitt als umfangsgeschlossener Rastring ausgebildet der dichtend an der Wischerwelle anliegt.

In Weiterbildung der Erfindung ist mit Vorteil vorgesehen, dass eine von dem Eingreifabschnitt umschlossene, von der Wischerwelle durchsetzte Öffnung des Funktionsbauteils elastisch aufweitbar ist, um eine Montage durch axiales Aufschieben des Funktionsbauteils auf die Wischerwelle zu ermöglichen. Hierdurch wird gewährleistet, dass sich der Radius der Öffnung beim Aufschieben des Funktionsbauteils auf die Wischerwelle zunächst vergrößert und automatisch wieder verkleinert, sobald der Eingreifabschnitt auf die Höhe der Umfangsnut in der Wischerwelle verschoben wird. Bevorzugt wird alleine durch die Elastizität des Funktionsbauteils im Bereich der erläuterten Öffnung zusätzlich zu der Formschlussverbindung eine reibschlüssige Verbindung zwischen dem Funktionsbauteil und der Wischerwelle realisiert.

Von besonderem Vorteil ist eine Ausführungsform der Wischerwellenanordnung, bei der der Eingreifabschnitt nicht unmittelbar von einem die Abstützfläche aufweisenden Grundplattenabschnitt des Funktionsbauteils gebildet wird, sondern bei der der Eingreifabschnitt über einen zumindest näherungsweise rohrförmigen Abschnitt in axialer Richtung von dem Grundplattenabschnitt beabstandet, also in Richtung des freien Endes der Wischerwelle versetzt angeordnet ist.

Um die Robustheit der Wischerwellenanordnung, insbesondere des Funktionsbauteils und dessen Axialsicherungsfunktion zu gewährleisten, ist der Rohrabschnitt über in Umfangsrichtung voneinander beabstandete Verstärkungsrippen an einem Grundplattenabschnitt des Funktionsbauteils abgestützt. Bevorzugt sind die Verstärkungsrippen dabei zumindest näherungsweise dreieckig konturiert.

Die Erfindung führt auch auf eine Wischanlage mit zumindest einer zuvor beschriebenen Wischerwellenanordnung. Dabei liegt es im Rahmen der Erfindung die Scheibenwischanlage entweder als Frontwischanlage oder als Heckwischanlage auszubilden.

Im Hinblick auf die Ausbildung der Scheibenwischanlage als Frontwischanlage ist eine Ausführungsform bevorzugt, bei der die Wischerwelle über ein Kurbelgestänge pendelnd angetrieben ist, wobei das Kurbelgestänge wiederum mittels einer Getriebe-Antriebseinheit angetrieben ist. Dabei ist es besonders bevorzugt, wenn das Bauelement, an dem sich das Funktionsbauteil in axialer Richtung abstützt, von einer Anlaufscheibe gebildet ist, die wiederum an einem, mindestens ein Wischerwellenlager aufnehmenden, Formrohr anliegt.

Alternativ stützt sich das Funktionsbauteil - insbesondere nach einer entsprechenden Oberflächenbearbeitung der Stirnseite des Formrohrs, unmittelbar in axialer Richtung an dem Formrohr ab. Letztere Ausführungsform ist in soweit vorteilhaft, als dass auf eine separate Anlaufscheibe verzichtet wird und das Funktionsbauteil zusätzlich die Funktion einer Anlaufscheibe übernimmt.

Alternativ ist es denkbar, dass die Wischerwelle nicht über ein Kurbelgestänge angetrieben ist, sondern unmittelbar von einem einem elektrischen Antriebsmotor zugeordnetem Verzahnungsgetriebe. Bevorzugt ist die Wischerwelle dabei von einem Abtriebszahnrad des Verzahnungsgetriebes angetrieben. Bei einer derartigen Ausführungsform ist es von Vorteil, wenn das Bauelement, an dem sich das Funktionsbauteil abstützt, von einer Anlaufscheibe oder einem Getriebegehäusebauteil gebildet ist. Im Falle des Vorsehens einer Anlaufscheibe ist es bevorzugt, wenn sich diese wiederum an dem Getriebegehäusebauteil abstützend angeordnet ist.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: eine teilweise geschnittene Ansicht einer Wischerwellenanordnung für eine Frontwischanlage,
- Fig. 2: eine als Front- oder Heckscheibenwischanlage ausgebildete Wischanlage mit einer integralen Wischerwellenanordnung,
- Fig. 3: eine Darstellung des bei den Ausführungsbeispielen gemäß den Fig. 1 und 2 zum Einsatz kommenden Funktionsbauteils und
- Fig. 4: eine um 90° gedrehte Ansicht des Funktionsbauteils gemäß Fig. 3.

### Ausführungsformen der Erfindung

In den Figuren sind gleiche Bauteile und Bauteile mit der gleichen Funktion mit den gleichen Bezugszeichen gekennzeichnet.

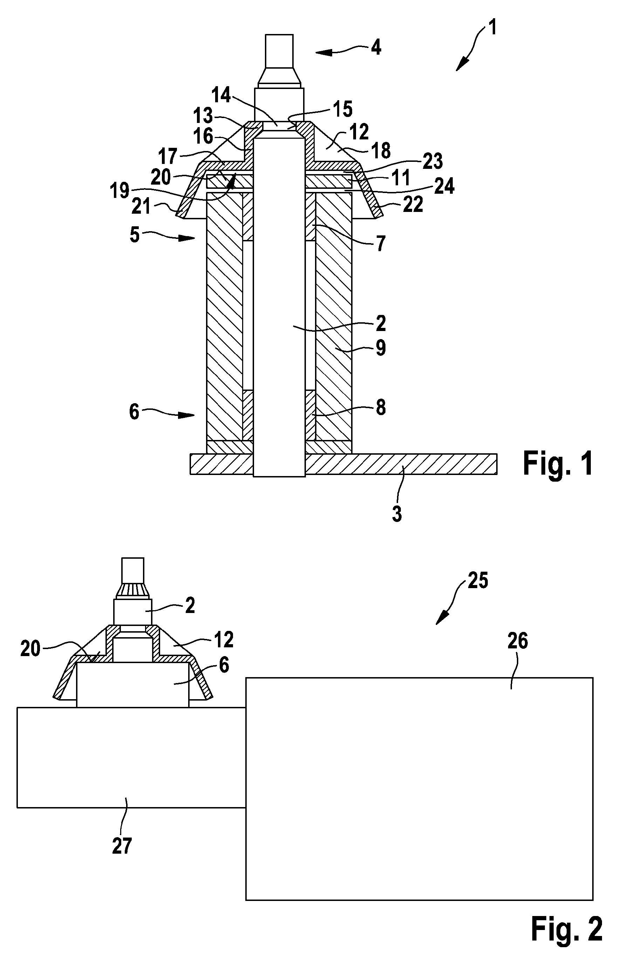

In Fig. 1 ist eine Wischerwellenanordnung 1 für eine ansonsten bekannte, nicht vollständig dargestellte Scheibenwischanlage gezeigt. Zu erkennen ist eine Wischerwelle 2, die drehfest mit einer Kurbel 3 eines nicht weiter dargestellten Kurbelgestänges verbunden ist. Mit Hilfe des elektromotorisch angetriebenen Kurbelgestänges wird die Kurbel 3 und damit die Wischerwelle 2 pendelnd um ihre Längsachse angetrieben. Hierdurch wird auf der Fahrzeugscheibe ein drehfest mit dem freien Ende 4 der Wischerwelle 2 verbundener, nicht gezeigter Wischerarm pendelnd betätigt.

Zur pendelnden Lagerung der Wischerwelle 2 ist eine Wischerlagereinheit 5 mit zwei in axialer Richtung beabstandeten Lagerbuchsen 7, 8 vorgesehen. Die Lagerbuchsen 7, 8 sind gemeinsam in einem drehfest angeordneten Formrohr 9 der Wischerwellenlagereinheit 5 aufgenommen, die von der Wischerwelle 2 axial durchsetzt ist. Das Formrohr 9 ist angeordnet zwischen einer unteren Anlaufscheibe 10, und einem als obere Anlaufscheibe ausgebildeten Bauelement 11, wobei sich das Formrohr 9 mit Hilfe der unteren Anlaufscheibe 10 axial an der Kurbel 3 abstützt.

Axial benachbart zu dem als obere Anlaufscheibe ausgebildeten Bauelement 11 und axial unterhalb des freien Endes 4 der Wischerwelle 2 ist ein Funktionsbauteil 12 angeordnet. Dieses, als Kunststoff-Spritzgussteil ausgebildete Funktionsbauteil 12 erfüllt gleichzeitig eine Vielzahl von Funktionen.

Aufgrund der Ausbildung des Funktionsbauteils 12 aus Kunststoff, übernimmt das Funktionsbauteil 12 eine Korrosionsschutzfunktion. Darüber hinaus dient das Funktionsbauteil 12 als Axialsicherung zum Verhindern oder Begrenzen einer axialen Verstellbewegung der Wischerwelle 2 relativ zu der Wischerwellenlagereinheit 5. Hierzu weist das Funktionsbauteil 12 einen ringförmigen, in Umfangsrichtung geschlossenen Eingreifabschnitt 13 auf, der in radialer Richtung nach innen in eine Umfangsnut 14 am Außenumfang der Wischerwelle 2 formschlüssig eingreift. Der Eingreifabschnitt 13 ist als umfangsgeschlossener Rastring ausgebildet, der radial innen eine zentrische Öffnung 15 begrenzt, die von der Wischerwelle 2 durchsetzt ist. Der Eingreifabschnitt 13 ist so dimensioniert, dass dieser abgeschert wird, wenn auf die Wischerwelle 2, beispielsweise verursacht durch einen Aufprall, eine Axialkraft wirkt, die eine vorgegebene Grenzaxialkraft überschreitet, mit der Folge, dass die axiale Sicherungsfunktion des Funktionsbauteils 12 zugunsten einer Fußgängeraufprallschutzfunktion verloren geht. Dies Wiederum resultiert in einer Verstellbewegung bzw. Abtauchbewegung der Wischerwelle 2 relativ zu dem Funktionsbauteil 12 in Richtung in das Kraftfahrzeug hinein.

Wie sich aus Fig. 1 ergibt, entspricht der Durchmesser der zentrischen Öffnung 15 im montierten Zustand dem Außenumfang des Nutgrundes der Umfangsnut 14. Damit das Funktionsbauteil 12 durch axiales Aufschieben auf die Wischerwelle 2, vorzugsweise von in Richtung des freien Endes 4 her, montierbar ist, ist das Funktionsbauteil 12 in einem Bereich radial außerhalb der zentrischen Öffnung 15 in gewissen Grenzen elastisch verformbar ausgebildet, sodass sich der Durchmesser der zentrischen Öffnung 15 zu Montagezwecken durch elastisches Verformen des Eingreifabschnitts 13 aufweiten lässt, mit der Folge, dass das Funktionsbauteil 12 in seine Montagestellung in die Umfangsnut 14 automatisch einschnappt, vorzugsweise derart, dass zwischen dem Eingreifabschnitt 13 und der Umfangsnut 14 ein spritzwasserdichter Presssitz realisiert wird.

Wie sich weiter aus Fig. 1 ergibt, ist der Eingreifabschnitt 13 in einem axial oberen Endbereich eines Rohrabschnitts 16 des Funktionsbauteils 12 ausgebildet, wobei der Rohrabschnitt 16 in axialer Richtung von der Wischerwelle 2 durchsetzt wird und einen Innendurchmesser aufweist, der größer ist als der Durchmesser der zentrischen Öffnung 15 in der Endmontageposition. Der im Wesentlichen zylindrische Rohrabschnitt 16 geht an seinem in der Zeichnungsebene unteren, von dem freien Ende 4 der Wischerwelle 2 abgewandten Ende über in einen scheibenförmigen Grundplattenabschnitt 17, der sich ausgehend von dem Rohrabschnitt 16 in radialer Richtung nach außen erstreckt. Der Grundplattenabschnitt 17 spannt mit dem Rohrabschnitt 16 einen rechten Winkel auf, wobei dieser sich in Umfangsrichtung erstreckende rechte Winkel abschnittsweise ausgefüllt ist von in Umfangsrichtung beabstandeten Verstärkungsrippen 18, die für die notwendige Robustheit des Funktionsbauteils 12 Sorge tragen. Die Verstärkungsrippen 18 sind in der gezeigten Ansicht dreieckig konturiert, wobei die Hypotenuse der Verstärkungsrippen 18 deren radiale Außenseite bildet.

An der den Verstärkungsrippen 18 und dem freien Ende 4 abgewandten, also der Wischerwellenlagereinheit 5 zugewandten Seite 19 des Grundplattenabschnittes 17 ist eine ringförmig konturierte Abstützfläche 20 realisiert, mit der sich das Funktionsbauteil 12 in axialer Richtung an der dem freien Ende 4 zugewandten (oberen) Seite des als obere Anlaufscheibe ausgebildeten Bauelementes 11 (Bauelement der Wischerwellenlagereinheit 5) abstützt.

In axialer Richtung an den Grundplattenabschnitt 17 schließt ein Wasserschutzabschnitt 21 des Funktionsbauteils 12 an. In diesen geht der Grundplattenabschnitt 17 in seinem radial äußeren Bereich über. Der Wasserschutzabschnitt 21 überragt die an dem Grundplattenabschnitt 17 ausgebildete, ringförmige Abstützfläche 20 in axialer Richtung, nach unten, also in eine Richtung von dem freien Ende 4 der Wischerwelle 2 weg. Dabei ist der Wasserschutzabschnitt 21 rockförmig ausgeformt und umfasst eine umlaufende, konisch ausgeformte Umfangswand 22, deren Außendurchmesser mit zunehmender Axialerstreckung nach unten zunimmt. Die Umfangswand 22 überragt nicht nur die Abstützfläche 20 in axialer Richtung, sondern auch einen minimalen, zwischen der Abstützfläche 20 und dem Bauelement 11 ausgebildeten, in radialer Richtung verlaufenden Spalt 23 sowie einen parallel dazu verlaufenden Spalt 24, der mit Axialabstand zu dem Spalt 23 angeordnet und zwischen dem Bauelement 11 und dem Formrohr 9 ausgebildet ist. In axialer Richtung reicht der Wasserschutzabschnitt bis radial außerhalb des Formrohrs 9 der Wischerwellenlagereinheit 5.

Die Wasserschutzfunktion des Funktionsbauteils 12 wird zum einen durch die Ausbildung der Formschlussverbindung zwischen dem Funktionsbauteil 12 und der Wischerwelle 2 als Presssitz und zum anderen durch das axiale Überragen der Abstützfläche 20 durch den Wasserschutzabschnitt 21 gewährleistet.

In Fig. 2 ist eine als Front- oder Heckscheibenwischanlage dargestellte Scheibenwischanlage 25 gezeigt. Diese umfasst einen elektrischen Antriebsmotor 26, der ein in einem Getriebegehäuse 27 angeordnetes Getriebe (nicht gezeigt) pendelnd oder rotierend antreibt. Im Falle eines rotierenden Antreibens des Getriebes ist dieses bevorzugt als Umsetzergetriebe zur Realisierung einer Pendelbewegung ausgebildet. Das im Getriebegehäuse 27 angeordnete Getriebe treibt wiederum pendelnd eine Wischerwelle 2 an, die wie bei dem Ausführungsbeispiel gemäß Fig. 1 formschlüssig mit einem Funktionsbauteil 12 verbunden ist. Dieses ist wie in Fig. 1 gezeigt und zuvor beschrieben ausgebildet. Der einzige Unterschied zu dem Ausführungsbeispiel gemäß Fig. 1 besteht darin, dass sich das Funktionsbauteil 12 mit seiner Abstützfläche 20 unmittelbar an einem als Getriebegehäusebauteil ausgebildeten Bauelement 6 abstützt.

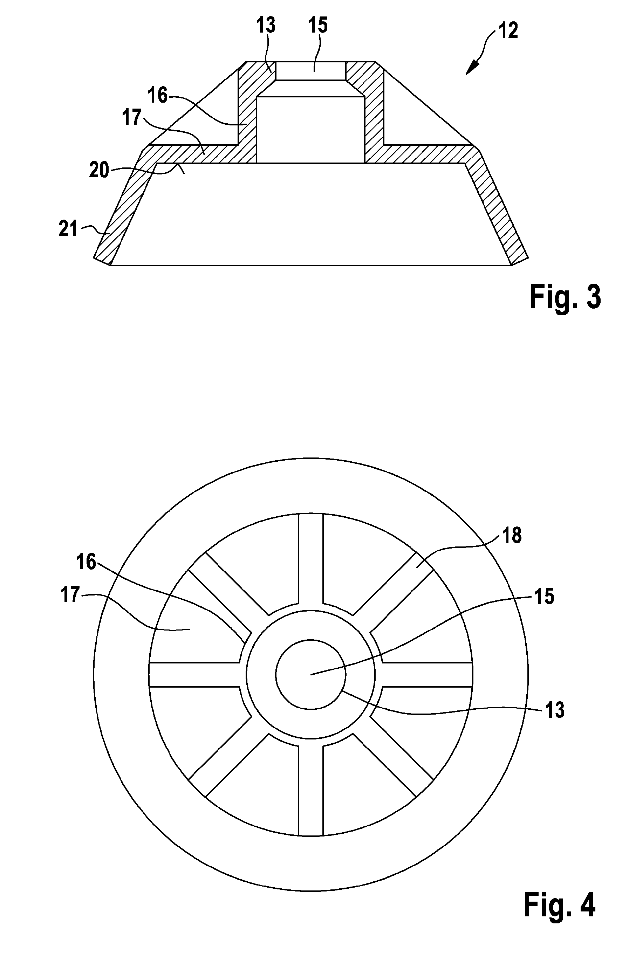

In Fig. 3 ist das Funktionsbauteil 12 gemäß den Fig. 1 und 2 in Alleinstellung gezeigt. Zu erkennen ist der in der Zeichnungsebene obere, radial innere, radial elastisch aufweitbare Eingreifabschnitt 13 zum Herstellen einer formschlüssigen Verbindung mit der Wischerwelle 2. An diesem schließt in axialer Richtung der zylindrische Rohrabschnitt 16 an, der in seinem axial unteren Bereich in den Grundplattenabschnitt 17 mit seiner Abstützfläche 20 übergeht. Der Grundplattenabschnitt 17 wiederum geht über in den rock- bzw. schürzenförmigen Wasserschutzabschnitt 21, der sowohl die Abstützfläche 20 als auch einen etwaigen, zwischen der Abstützfläche 20 und einem benachbarten, in Fig. 3 nicht gezeigten Bauelement ausgebildeten Spalt in axialer Richtung überragt.

In Fig. 4 ist das Funktionsbauteil 12 in einer Draufsicht gezeigt. Zu erkennen ist die zentrische Öffnung 15, die im montierten Zustand von der Wischerwelle 2 durchsetzt ist. Diese wird radial außen begrenzt von dem ringförmigen Eingreifabschnitt 13. Zu erkennen ist aus Fig. 4, dass zwischen einem axial an den Eingreifabschnitt 13 angrenzenden Rohrabschnitt 16 und dem Grundplattenabschnitt 17 eine Vielzahl von gleichmäßig in Umfangsrichtung verteilt angeordneten Verstärkungsrippen 18 angeordnet sind.

## Patentansprüche

1. Wischerwellenanordnung für eine Scheibenwischanlage (25), insbesondere für ein Kraftfahrzeug, mit mindestens einer Wischerwelle (2) zum pendelnden Antreiben eines Wischerarms und mit mindestens einem als Axialsicherung für die Wischerwelle (2) ausgebildeten, von der Wischerwelle (2) durchsetzten Funktionsbauteil (12), das formschlüssig mit der Wischerwelle (2) verbunden ist und sich in axialer Richtung mit einer Abstützfläche (20) an einem Bauelement (6, 11) der Wischerwellenanordnung (1) abstützt,
wobei
das Funktionsbauteil (12) einen Wasserschutzabschnitt (21) aufweist, der die Abstützfläche (20), mit der sich das Funktionsbauteil (12) an dem Bauelement (6, 11) abstützt, in axialer Richtung überragt, wobei die formschlüssige Verbindung zwischen der Wischerwelle (2) und dem Funktionsbauteil (12) durch Eingreifen, eines Eingreifabschnittes (13) des Funktionsbauteils (12) in eine Umfangsnut (14) der Wischerwelle (2) realisiert ist, wobei der, vorzugsweise als umfangsgeschlossener Rastring ausgebildete, Eingreifabschnitt (13) derart ausgebildet und/oder angeordnet ist, dass bei Überschreiten einer definierten Axialkraftbelastung eine Abtauchbewegung der Wischerwelle (2) relativ zu dem Funktionsbauteil (12) in Richtung in das Kraftfahrzeug hinein resultiert,
wobei der Eingreifabschnitt (13), insbesondere über einen Rohrabschnitt (16), in axialer Richtung von einem Grundplattenabschnitt (17) beabstandet ist, der an seiner von dem Rastringabschnitt angewandten Seite (19) die Abstützfläche (20) bildet, **dadurch gekennzeichnet, dass** der Eingreifabschnitt (13) derart ausgebildet und/oder angeordnet ist, dass dieser bei Überschreiten der definierten Axialkraftbelastung abschert und dass mehrere in Umfangsrichtung beabstandete Verstärkungsrippen (18) vorgesehen sind, die sich zwischen einer von der Abstützfläche (20) abgewandten Seite (19) des Grundplattenabschnitts (17) und einer Außenseite des Rohrabschnitts (16) erstrecken.

2. Wischerwellenanordnung nach Anspruch 1,
**dadurch gekennzeichnet,**
**dass** das Funktionsbauteil (12) aus Kunststoff, vorzugsweise als Kunststoff-Spritzgussteil ausgebildet ist.

3. Wischerwellenanordnung nach einem der Ansprüche 1 oder 2,
**dadurch gekennzeichnet,**
**dass** der Wasserschutzabschnitt (21) rockförmig ausgeformt ist.

4. Wischerwellenanordnung nach einem der vorhergehenden Ansprüche,
**dadurch gekennzeichnet,**
**dass** von dem Eingreifabschnitt (13) eine, von der Wischerwelle (2) durchsetzte Öffnung (15) begrenzt ist, wobei der Eingreifabschnitt (13) zum Vergrößern der Öffnung (15) zu Montagezwecken elastisch aufweitbar ist.

5. Scheibenwischanlage mit einer Wischerwellenanordnung (1) nach Anspruch 1.

6. Scheibenwischanlage nach Anspruch 5,
**dadurch gekennzeichnet,dass** die Wischerwelle (2) über ein Kurbelgestänge pendelnd angetrieben ist und dass das Bauelement (11), an dem sich das Funktionsbauteil (12) abstützt von einer Anlaufscheibe oder einem mindestens eine Lagerbuchse (7, 8) aufnehmendem Formrohr (9) gebildet ist.

7. Scheibenwischanlage nach einem der Ansprüche 5 oder 6,
**dadurch gekennzeichnet,**
**dass** die Wischerwelle (2) unmittelbar von einem, insbesondere als Schneckengetriebe ausgebildeten, Verzahnungsgetriebe angetrieben ist, und dass das Bauelement (6, 11), an dem sich das Funktionsbauteil (12) axial abstützt von einer Anlaufscheibe oder einem Getriebegehäusebauteil gebildet ist.

## Claims

1. Wiper shaft assembly for a window wiper system (25), in particular for a motor vehicle, with at least one wiper shaft (2) for the oscillating driving of a wiper arm, and with at least one functional component (12) which is designed as axial securing for the wiper shaft (2) and through which the wiper shaft (2) passes and which is connected to the wiper shaft (2) in a form-fitting manner and is supported in the axial direction with a supporting surface (20) on a structural element (6, 11) of the wiper shaft arrangement (1),
wherein
the functional component (12) has a water protection portion (21) which projects in the axial direction over the supporting surface (20) with which the functional component (12) is supported on the structural element (6, 11), wherein the form-fitting connection between the wiper shaft (2) and the functional component (12) is realized by engagement of an engagement portion (13) of the functional component (12) in a circumferential groove (14) of the wiper shaft (2), wherein the engagement portion (13), which is preferably designed as a circumferentially closed latching ring, is designed and/or arranged in such a manner that, when a defined axial force loading is exceeded, a dipping movement of the wiper shaft (2) relative to the functional component (12) in the direction into the motor vehicle results, wherein
the engagement portion (13) is spaced apart, in particular via a tubular portion (16), in the axial direction from a baseplate portion (17) which, on its side (19) facing away from the latching ring portion, forms the supporting surface (20), **characterized in that** the engagement portion (13) is designed and/or arranged in such a manner that the engagement portion shears off when a defined axial force loading is exceeded, and **in that**
a plurality of reinforcing ribs (18) are provided which are spaced apart in the circumferential direction and extend between a side (19) of the baseplate portion (17) facing away from the supporting surface (20) and an outer side of the tubular portion (16).

2. Wiper shaft assembly according to Claim 1,
**characterized in that**
the functional component (12) is formed from plastic, preferably in the form of an injection-moulded plastics part.

3. Wiper shaft assembly according to either of Claims 1 and 2,
**characterized in that**
the water protection portion (21) is formed in the shape of a skirt.

4. Wiper shaft assembly according to one of the preceding claims,
**characterized in that**
an opening (15) through which the wiper shaft (2) passes is bounded by the engagement portion (13), wherein the engagement portion (13) is widenable elastically in order to enlarge the opening (15) for installation purposes.

5. Window wiper system with a wiper shaft assembly (1) according to Claim 1.

6. Window wiper system according to Claim 5,
**characterized in that** the wiper shaft (2) is driven in an oscillating manner via a crank linkage, and **in that** the structural element (11), on which the functional component (12) is supported, is formed by a thrust washer or a shaped tube (9) holding at least one bearing bushing (7, 8).

7. Window wiper system according to either of Claims 5 and 6,
**characterized in that**
the wiper shaft (2) is driven directly by a toothed gearing, which is designed in particular as a worm gearing, and **in that** the structural element (6, 11), on which the functional component (12) is supported axially, is formed by a thrust washer or a gearing housing component.

## Revendications

1. Agencement d'arbre d'essuie-glace pour une installation d'essuie-glace (25), en particulier pour un véhicule automobile, comprenant au moins un arbre d'essuie-glace (2) pour l'entraînement oscillant d'un arbre d'essuie-glace et comprenant au moins un composant fonctionnel (12) réalisé en tant que fixation axiale pour l'arbre d'essuie-glace (2), traversé par l'arbre d'essuie-glace (2), qui est connecté par engagement par correspondance de formes à l'arbre d'essuie-glace (2) et qui s'appuie dans la direction axiale avec une surface d'appui (20) contre un élément structurel (6, 11) de l'agencement d'arbre d'essuie-glace (1),
le composant fonctionnel (12) présentant une portion de protection contre l'eau (21) qui dépasse dans la direction axiale de la surface d'appui (20) avec laquelle le composant fonctionnel (12) s'appuie contre l'élément structurel (6, 11), la connexion par engagement par correspondance de formes entre l'arbre d'essuie-glace (2) et le composant fonctionnel (12) étant réalisée par l'engagement d'une portion d'engagement (13) du composant fonctionnel (12) dans une rainure périphérique (14) de l'arbre d'essuie-glace (2), la portion d'engagement (13) réalisée de préférence sous la forme d'une bague d'encliquetage fermée sur la périphérie étant réalisée et/ou disposée de telle sorte qu'en cas de dépassement d'une contrainte de force axiale définie, il en résulte un mouvement de rétraction de l'arbre d'essuie-glace (2) par rapport au composant fonctionnel (12) dans la direction de l'intérieur du véhicule automobile, la portion d'engagement (13) étant espacée dans la direction axiale, notamment par le biais d'une portion tubulaire (16), d'une portion de plaque de base (17), qui forme la surface d'appui (20) au niveau de son côté (19) opposé à la portion de bague d'encliquetage, **caractérisé en ce que** la portion d'engagement (13) est réalisée et/ou disposée de telle sorte que celle-ci se cisaille en cas de dépassement de la contrainte de force axiale définie et **en ce que** plusieurs nervures de renforcement (18) espacées dans la direction périphérique sont prévues, lesquelles s'étendent entre un côté (19) de la portion de plaque de base (17) opposé à la surface d'appui (20) et un côté extérieur de la portion tubulaire (16).

2. Agencement d'arbre d'essuie-glace selon la revendication 1,
**caractérisé en ce que**
le composant fonctionnel (12) est réalisé en plastique, en particulier sous forme de pièce moulée par injection de plastique.

3. Agencement d'arbre d'essuie-glace selon l'une quelconque des revendications 1 ou 2,
**caractérisé en ce que**
la portion de protection contre l'eau (21) est formée en forme de jupe.

4. Agencement d'arbre d'essuie-glace selon l'une quelconque des revendications précédentes, **caractérisé en ce qu'**
une ouverture (15) traversée par l'arbre d'essuie-glace (2) est délimitée par la portion d'engagement (13), la portion d'engagement (13) pouvant être élargie élastiquement afin d'augmenter l'ouverture (15) à des fins de montage.

5. Installation d'essuie-glace comprenant un agencement d'arbre d'essuie-glace (1) selon la revendication 1.

6. Installation d'essuie-glace selon la revendication 5,
**caractérisée en ce que** l'arbre d'essuie-glace (2) est entraîné en oscillation par le biais d'une tige de manivelle et **en ce que** l'élément structurel (11) au niveau duquel s'appuie le composant fonctionnel (12) est formé par un disque de butée ou par un tube façonné (9) recevant au moins une douille de palier (7, 8).

7. Installation d'essuie-glace selon l'une quelconque des revendications 5 ou 6,
**caractérisée en ce que**
l'arbre d'essuie-glace (2) est directement entraîné par une transmission à denture, en particulier sous la forme d'une transmission à vis sans fin, et **en ce que** l'élément structurel (6, 11) contre lequel le composant fonctionnel (12) s'appuie axialement est formé par un disque de butée ou par un composant de boîtier de transmission.
